Europäisches Patentamt

European Patent Office

Office européen des brevets

(19)

(11) **EP 1 173 980 B1**

(12) **FASCICULE DE BREVET EUROPEEN**

(45) Date de publication et mention
de la délivrance du brevet:
**04.12.2002 Bulletin 2002/49**

(21) Numéro de dépôt: **00917165.3**

(22) Date de dépôt: **07.04.2000**

(51) Int Cl.⁷: **H04N 7/26**

(86) Numéro de dépôt international:
**PCT/FR00/00900**

(87) Numéro de publication internationale:
**WO 00/065840 (02.11.2000 Gazette 2000/44)**

(54) **PROCEDE D'INSERTION D'UN FILIGRANE DANS UNE IMAGE**

VERFAHREN ZUR WASSERZEICHENSEINFÜHRUNG IN EIN BILD

METHOD FOR INSERTING A WATERMARK INTO AN IMAGE

(84) Etats contractants désignés:
**AT BE CH CY DE DK ES FI FR GB GR IE IT LI LU
MC NL PT SE**

(30) Priorité: **23.04.1999 FR 9905194**

(43) Date de publication de la demande:
**23.01.2002 Bulletin 2002/04**

(73) Titulaire: **Thales
75008 Paris (FR)**

(72) Inventeurs:
• **BAUDRY, Séverine, Thomson-CSF Prop. Intel.
94117 Arcueil Cedex (FR)**
• **NICHOLSON, Didier,
Thomson-CSF Proprieté Intel.
94117 Arcueil Cedex (FR)**
• **SIMON, Catherine,
Thomson-CSF Propriété Intel.
94117 Arcueil Cedex (FR)**
• **N'GUYEN, Philippe,
Thomson-CSF Propriété Intel.
94117 Arcueil Cedex (FR)**

(74) Mandataire: **Chaverneff, Vladimir et al
THALES Intellectual Property,
13, avenue du Président S. Allende
94117 Arcueil Cédex (FR)**

(56) Documents cités:
**EP-A- 0 766 468          EP-A- 0 840 513
EP-A- 0 902 591**

## Description

La présente invention concerne un procédé de tatouage d'image pour le traitement et la transmission d'images fixes ou vidéo.

En télécommunication, le tatouage d'image est le fait de transmettre une information dans une image ou une séquence d'images sans qu'il s'ensuive de modifications perceptibles dans la composition de l'image ou de la séquence d'images reçue. Ce processus est encore connu sous le vocable anglo-saxon du "watermarking".

Cette définition rappelle celle de la stéganographie, appelée également transmission par canal subliminal, qui est l'art d'envoyer des messages de façon cachée, une information en apparence innocente contenant un message caché ne pouvant être lu que par les destinataires attitrés. Contrairement à la cryptographie, la stéganographie dissimule l'existence même du message sublimimal.

La différence essentielle entre le tatouage d'image et la stéganographie réside dans le choix de ce qui est appelé le "canal de couverture" à savoir le message en clair qui contient le message caché.

En stéganographie, l'émetteur peut effectuer ce choix lui-même, alors qu'il est imposé dans le cas du tatouage. Les motivations des deux techniques ne sont également pas les mêmes car l'émetteur d'un message stéganographique veut pouvoir communiquer des informations secrètes sans éveiller les soupçons d'un gardien, alors que l'émetteur d'une image tatouée veut que le message caché ne perturbe pas une oeuvre de façon perceptible et ne soit pas aisément brouillé, mais le fait que quiconque puissent éventuellement être informé de la présence d'un message caché dans une image n'est pas gênant, bien au contraire cela peut présenter un effet dissuasif bénéfique lorsque par exemple, le tatouage est destiné à être utilisé comme signe permettant aux images de bénéficier de la protection accordée par les droits d'auteur et du copyright en particulier. Dans ce cas le tatouage est réalisé en enfouissant dans une image ou une séquence d'images une information qui caractérise l'oeuvre et son propriétaire. La relecture automatique de l'information enfouie permet de vérifier si l'oeuvre n'a pas été diffusée illégalement, ou encore de vérifier si l'auteur a bien perçu les droits correspondants. Le tatouage d'image permet également d'effectuer un suivi de documents lorsque l'information enfouie est caractéristique de la personne qui l'a acheté, ce qui permet, lors de copies ou de diffusions illicites, de connaître automatiquement le responsable de la fraude.

Il en va de même pour toutes les applications d'indexation automatique d' image ou de séquences d'images.

L'intérêt de l'emploi du tatouage réside dans la possibilité de rendre automatique les contrôles. Il est en effet utopique de penser contrôler manuellement la diffusion d'oeuvres audiovisuelles, étant donné la multiplicité des canaux de transmission. Le tatouage d'images permet de résoudre partiellement ce problème en permettant à partir d'une oeuvre, de déterminer automatiquement son numéro d'identifiant et éventuellement sa provenance, à charge ensuite à la société des auteurs de déterminer si l'oeuvre a bien été diffusée légalement. Les techniques de tatouage offrent également l'avantage de ne pas nécessiter de normalisation ou d'accords préalables entre les différents acteurs contrairement à ce qui est actuellement pratiqué pour les protections matérielles contre les copies inclues dans les disques vidéo numériques encore connus sous l'abréviation anglo-saxonne "D V D" de "Digital Video disk".

Pour pouvoir transmettre un message au travers d'une image, il est nécessaire de modifier celle-ci d'une façon ou d'une autre. Les modifications apportées par le tatouage doivent cependant vérifier un certain nombre de conditions afin de pouvoir être compatible des applications visées.

C'est ainsi que le tatouage ne doit pas modifier les images de façon visible afin de ne pas dégrader la qualité de celles-ci. Il faut par conséquent que le marquage soit discret.

Comme cela sera montré plus loin, beaucoup de méthodes de tatouage décrites dans la littérature nécessitent la présence de l'image originale en plus de l'image modifiée lors de la lecture du message. De ce fait ces méthodes paraissent totalement inadaptées à la protection des oeuvres par le copyright car elles supposent que l'auteur ait repéré une oeuvre semblant lui appartenir et diffusée illicitement, avant de pouvoir prouver par la lecture du tatouage que l'oeuvre est bien la sienne. Il est dans ce cas bien plus rapide de comparer les deux oeuvres que de lire un tatouage... .La lecture d'un tatouage à partir de l'image modifiée seule doit donc être possible pour les applications de "monitoring" automatique. Les méthodes de tatouage utilisant les deux images en lecture peuvent cependant être utilisées pour les applications de suivi évoquées précédemment, l'identité de l'oeuvre étant alors certaine, le tatouage permettant uniquement de renseigner sur la provenance de la copie concerné.

Le tatouage devient un problème trivial si on est sûr que l'image tatouée ne sera en aucune manière modifiée. Il suffit alors de modifier les bits de poids faible des pixels, ce qui est une manipulation totalement invisible et qui permet d'enfouir autant de bits qu'il y a de pixels. Cependant, ce cas idéal ne se rencontre jamais dans la pratique, du fait que les images, et notamment les séquences d'images, sont presque toujours compressées pour obtenir un débit acceptable lors d'une transmission ou d'économiser de l'espace mémoire lors d'un stockage. Cette compression peut être sans perte comme c'est le cas avec la norme « JPEG useless », mais elle est le plus souvent non réversible pour des questions d'efficacité dans les transmissions d'images selon les normes JPEG et MPEG. Il est par conséquent impératif que le tatouage puisse survivre à ces transformations, ce qui est d'autant plus difficile que la compression a lieu à débit faible. En conséquence le marquage doit être suffisamment fort, ce qui est une contrainte antagoniste à la contrainte précédente d'invisibilité.

Il n'est pas rare non plus que, lors de sa diffusion notamment, une oeuvre soit modifiée afin de faciliter la transmission. La postproduction introduit par exemple souvent un "cropping" c'est à dire un découpage des séquences. Le format de celles-ci peut également être modifié, notamment lors du passage du standard de télévision américain (images 720x480 à 30Hz) au format européen (images 720x576 à 25 Hz). Les rééchantillonnages pour l'agrandissement ou la réduction des images sont également fréquents.

Dans le contexte du tatouage d'images ces transformations posent deux types de problèmes, d'une part, elles ne sont en général pas réversibles ceci étant évidemment vrai lors d'un découpage, mais également lors d'une réduction d'image car beaucoup d'informations sont perdues dans les fréquences élevées de l'image, et d'autre part, la transformation existant entre l'image originale et l'image transformée n'est généralement pas connue. Il s'ensuit que le tatouage doit soit être invariant par transformation géométrique, soit être accompagné d'une information supplémentaire permettant la synchronisation. Cette transformation peut prendre la forme d'un tatouage particulier permettant de déterminer la transformation effectuée.

Les manipulations d'images et de films numériques est particulièrement facile, dès lors que l'utilisateur dispose d'un logiciel même très rudimentaire de traitement d'images. Les transformations géométriques sont parmi les manipulations les plus simples, elles consistent notamment à effectuer des découpages d'images, des agrandissements ou des réductions, des montages de plusieurs séquences, des collages et plus rarement des rotations. Les modifications fréquentielles sont relativement aisées, ainsi que les manipulations de colorimétrie consistant à passer de la couleur au noir et blanc ou l'inverse pour les films, en la transformation d'histogrammes etc... Il faut également noter la possibilité de passage du numérique vers l'analogique ou vice versa pour les opérations de photocopie d'image, de numérisation de cassettes vidéo etc.., qui entraînent un bruit supplémentaire ainsi que des distorsions géométriques ou colorimétriques.

Le tatouage doit également être résistant aux attaques intentionnelles de pirates visant à détruire la marque afin de pouvoir diffuser une oeuvre sans payer de droits d'auteur. Les procédés d'attaque peuvent être de deux types, soit ils consistent en des tentatives d'inversion du processus de marquage, en aveugle ou à l'aide de la connaissance partielle ou totale de l'algorithme de marquage, soit par brouillage du message par ajout d'un bruit ou par transformation par filtrage par exemple. Le premier type d'attaque peut être contré en utilisant des procédés semblables à ceux employés en cryptographie en utilisant des clés secrètes. Dans le deuxième type d'attaque, le piratage doit effectuer un compromis entre la force du brouillage et la dégradation de qualité qui en résulte. Il peut d'ailleurs être tiré partie de ce fait pour réaliser un bon tatouage en marquant avec une force juste inférieure au seuil de visibilité, tout le problème étant de déterminer précisément ce seuil.

Enfin le tatouage doit être de faible complexité. La complexité est un problème crucial pour un système réel. Si l'écriture peut parfois se faire en différé, la lecture doit obligatoirement pouvoir être effectuée en ligne pour les applications de "monitoring", or c'est fréquemment cette étape qui est la plus coûteuse en temps de calcul.

Bien que le domaine du tatouage soit relativement récent, un grand nombre d'approches ont déjà été proposées dans la littérature. Celles ci font appel à des méthodes diverses de tatouage qui peuvent être classées en méthodes de tatouage spatiale ou pixellique, méthodes de tatouage par transformées ou fréquentielles, et méthodes de tatouage par codage.

D'autres approches ont également été étudiées, pour des tatouages de type audio, de texte ou d'images de synthèse proposent un algorithme particulier. D'autres proposent une formulation plus générale du problème, notamment en termes de théorie de l'information. Les articles qui les décrivent tentent de quantifier plus précisément la bande passante disponible pour le message tatoué. D'autres articles présentent des méthodes d'attaque spécifiques à une technique de tatouage particulière ou plus générale. Parallèlement, des techniques de formalisation de ces attaques apparaissent, utilisant la théorie des jeux ou les concepts de cryptographie et de stéganographie par exemple, visant à permettre l'élaboration de systèmes plus robustes.

Dans les méthodes de tatouage spatiale, l'écriture du message est effectuée directement dans le plan de l'image, généralement par modification de la luminance des pixels.

Dans les méthodes de tatouage par transformées l'écriture du message est effectuée sur une transformée de l'image ou d'une séquence. Les transformées utilisées sont généralement des types Fourier, transformée cosinus, ou ondelette.

Enfin dans les méthodes de tatouage par codage le tatouage est enfoui en modifiant directement certains éléments obtenus lors d'un encodage. Ceci concerne par exemple les vecteurs de mouvement dans le codage MPEG, le codage en blocs ou "matching blocs" d'une compression fractale etc... Les méthodes de codage DCT par transformées cosinus de l'abréviation anglo saxonne "Discret Cosinus Transform" peuvent aussi être incluses dans cette catégorie.

Ces grandes familles peuvent également être divisées en deux sous familles qui recouvrent les méthodes de codage par blocs et les méthodes de codage d'images. Dans les méthodes de codage par blocs, du type DCT ou les méthodes de codage pixellique par exemple, l'unité de codage est le bloc dans lequel sont enfouis un ou plusieurs bits. Dans les méthodes de codage d'images, le tatouage est effectué sur l'image de façon globale, en utilisant par exemple une transformée de Fourier globale de l'image.

Les méthodes spatiales sont parmi les plus anciennes et sont les plus simples. L'avantage de ces méthodes est qu'elles permettent une écriture du tatouage généralement plus rapide ne nécessitant pas de transformations coûteuses comme c'est le cas par exemple pour les méthodes basées sur la transformation de Fourier. Elles sont cependant moins robustes aux techniques de compression basées sur le calcul de transformées DCT.

Parmi les méthodes de tatouage spatial l'algorithme dénommé "patchwork" de MM Bender, Gruhl, Morimoto dont une description peut être trouvé dans l'article ayant pour titre:" Techniques for Data Hiding" publiédans les Proceedings par SPIE, vol.2420 p.40, fév. 95 repose sur les observations que l'oeil est peu sensible aux faibles changements de luminance, surtout lorsque ceux-ci sont aléatoires et assimilables à un bruit de faible puissance et que les moyennes des luminances de deux ensembles de N points choisis aléatoirement sont " en moyenne" égales lorsque le nombre N est grand.

Dans cet algorithme récriture a lieu en utilisant une dé secrète, et n couples de points $A_i$ et $B_i$ respectivement de luminance $a_i$ et $b_i$ choisis de façon pseudo-aléatoire dans l'image. La luminance des points choisis est modifiée suivant les relations $a_i' = a_i + 1$ et $b_i' = b_i - 1$. Les points étant choisis aléatoirement, la différence $a_i - b_i$ sera en moyenne nulle pour N suffisamment grand. Par contre, la différence $a_i' - b_i'$ sera en moyenne à peu près égale à 2, ce qui permet le décodage.

Pour retrouver les points initiaux la lecture a lieu à l'aide de la clé secrète. Un calcul de la quantité

$$S = \sum_{i=0}^{N-1} (ai - bi)$$

permet de décider que l'image est tatouée lorsque $S \approx 2N$.

Cette méthode permet d'enfouir un seul bit dans l'image, mais elle peut être généralisée sur plusieurs bits en choisissant plusieurs ensembles disjoints de points. Elle a pour avantage de présenter une bonne invisibilité, et une bonne résistance aux transformations comme la compression, l'ajout de bruit,... et ceci d'autant plus que le nombre N est grand. Elle présente aussi une bonne résistance au découpage de l'image, du à la dissémination de l'information, et une bonne résistance aux attaques dès lors que la clé n'est pas connue.

Elle présente par contre les inconvénients d'une faible résistance aux transformations géométriques et d'exiger un compromis entre le nombre de bits à enfouir et la résistance du message.

Une autre méthode utilisant la modulation d'amplitude de la chrominance qui est décrite dans l'article de MM Kutter, Jordan, Bossen ayant pour titre : "Digital Signature of Color Image Using Amplitude Modulation" et publiée par S P I E El 97 consiste à modifier la composante bleu du signal de chrominance auquel l'oeil est peu sensible et à agir en fonction de la force de marquage sur la modulation du signal de luminance en tenant compte du fait que la rétine est plus sensible aux contrastes qu'à la luminance proprement dite, l'acuité de l'oeil étant moins importante aux fortes luminances. Un balayage en zigzag est effectué pour s'affranchir de la taille de l'image. La lecture est effectuée par prédiction linéaire. Suivant cette méthode le message peut être écrit de façon robuste en enfouissant plusieurs fois le même bit. Le balayage en zigzag permet de s'affranchir de la taille de l'image, ainsi que d'une synchronisation en cas de découpe du bas ou de la gauche de l'image. La méthode présente également une bonne résistance aux attaques. Par contre la complexité des calculs devient très importante dans le cas où des transformations géométriques doivent être effectuées, car cette méthode nécessite une recherche exhaustive dans l'espace des paramètres.

Une autre méthode de tatouage spatial décrite par les auteurs Jean François Delaigle et Benoit Macq dans Talisman Projet Report Jan 97 sous le titre "Digital Watermarking" met en oeuvre un algorithme permettant l'enfouissement d'un bit par bloc d'image de dimension nxn. Un bloc est divisé en deux groupes de pixels A et B. Les valeurs des pixels des deux groupes sont modifiées de façon que la différence des moyennes des luminances des groupes A et B soit porteuse du bit à transmettre. Ces modifications se font sans modifier la moyenne globale des luminances du bloc pour préserver une bonne invisibilité. La force de marquage dépend d'un paramètre I. Avec cette méthode on obtient une résistante au codage suivant la norme JPEG de 70% avec un taux d'erreur de 5% pour un niveau de luminance de marquage I=5. Le marquage est invisible pour des niveaux de marquage pas trop élevés pour I<8, mais la visibilité et la robustesse dépendent pour un niveau de marquage déterminé, de la taille du bloc. Cependant la méthode présente un inconvénient majeur qui est de présenter une faible résistance aux transformations géométriques et aux attaques de type suppression de lignes ou de colonnes.

Les méthodes de codage par transformées fréquentielles telle que celle décrite dans la demande de brevet DE 19521969 présentent deux intérêts. Elles permettent d'une part, d'anticiper la compression en écrivant l'information de tatouage dans les composantes de l'image ayant le moins de chances d'être modifiées et d'autre part elles permettent de prendre en compte les caractéristiques de perception de l'oeil humain pour marquer de façon plus forte dans les composantes les moins perceptibles.

Ces deux aspects sont néanmoins antithétiques puisque les techniques de compression prennent justement appui sur les caractéristiques de l'oeil.

Suivant une première approche publiée par MM Eckhard Koch et Jian Zhao dans l'article intitulé "Embedding Robust Labels into Images for Copyright Protection", proc.Int Congr. Intellectual Property Rights for Specialized Information, Knowledge and New Technologies, Vienne, Autriche août 95, l'écriture du message de tatouage est effectuée par une modification des coefficients de la transformée cosinus discrète DCT en anticipant le bruit de quantification introduit par les compressions de l'image effectuées suivant les procédés JPEG ou MPEG pour assurer la survie du tatouage lors de ces compressions. Cette approche permet d'obtenir une bonne résistance à la compression car le bruit de quantification n'est plus un bruit aléatoire du fait qu'il est anticipé lors du marquage. La résistance dépend bien sûr du facteur Q de quantification utilisé lors du marquage. Plus le facteur Q est élevé, meilleure est la robustesse au prix cependant d'une augmentation de la visibilité. Un autre intérêt de la méthode est que l'algorithme de tatouage peut être mis en oeuvre directement dans un codeur JPEG ou MPEG ce qui permet de profiter directement des calculs des coefficients DCT effectués lors de la compression. Cependant les performances de la méthode peuvent se dégrader très rapidement lorsque les blocs des coefficients DCT de l'image ne coïncident pas avec les blocs de l'image d'origine, ce qui se produit par exemple lorsque l'image a été légèrement décalée, dans ce cas le bruit de quantification n'est alors plus prévisible.

Une autre méthode décrite par MM Ingemar Cox, Joe Killian, Thomson Leighton, Talal Shamoon dans l'article paru dans IEEE Trans.on Image Processing, vol 6 No 12, dec. 97 intitulé "Secure Spread Spectrum watermarking for Multimedia" effectue une approche "bande étalée" consistant à enfouir le message de tatouage dans toutes les composantes fréquentielles de l'image après avoir effectué le calcul des coefficients DCT, ce qui rend indécelable l'énergie du message sur chacune des fréquences mais qui en contre partie fait que le rapport signal à bruit est élevé. Des critères de visibilité sont en outre utilisés pour pondérer la force du marquage selon les composantes fréquentielles. Les avantages de cette méthode sont de présenter une très bonne résistance aux compressions de type JPEG et MPEG et d'offrir une très bonne résistance aux transformations géométriques dès lors que ces transformations sont connues. La méthode offre des possibilités de multitatouage. Elle résiste bien aux attaques par collusion en effectuant une moyenne sur des documents portant des tatouages différents, et aux tentatives de brouillage du fait qu'en l'absence de connaissance du message de tatouage, il faut ajouter un bruit suffisamment fort à toutes les fréquences, ce qui dégrade la qualité visuelle de l'image, pour détruire le tatouage. Cependant la méthode présente un inconvénient majeur qui est celui de nécessiter d'avoir l'image originale pour retrouver le tatouage, celui-ci étant obtenu par soustraction de l'image tatouée transformée de l'image originale transformée.

Une autre méthode décrite dans un article de MM Joseph O' Ruanaidh, Thierry Pun ayant pour titre : "Rotation, Scale and Translation Invariant Digital Image Watermarking ", paru dans les proceedings de IEEE ICIP 97 vol.1, p. 536-539 Santa Barbara, consiste à utiliser un espace invariant par rotation, translation, mise à l'échelle, pour s'affranchir des transformations géométriques qui peuvent être réalisées sur l'image. Ceci est obtenu en tirant parti des propriétés de la transformée de Fourier-Mellin. La méthode a l'avantage de présenter une grande résistance aux transformations géométriques sans nécessiter une synchronisation préalable. Toutefois les propriétés d'invariance de la transformée Fourier-Mellin ne sont plus respectées lorsque la translation circulaire est remplacée par un "cropping". D'autre part, les calculs qui exigent des transformations dans un plan log-polaire sont relativement complexes.

Une autre méthode décrite dans l'article de MM Joseph O' Ruanaidh, W.Dowling, F.Boland ayant pour titre "Phase Watermarking of Digital Images" publiée par ICIP 96 utilise une transformée de Fourier en écrivant le message de tatouage à l'aide d'une modulation de phase. La méthode a pour avantage d'offrir une résistance aux procédés de compression JPEG et MPEG. Elle a cependant l'inconvénient que les modifications de phase apparaissent de façon plus visibles que les modulations d'amplitude.

Une autre méthode décrite dans l'article de MM Mitchell Swanson, Bin Zhu, Ahmed Tewfik, ayant pour titre "Multiresolution Scene-based Video Watermarking Using Perceptual Models", publiée dans IEEE journal on selected areas in communications, vol 16 No 4, Mai 98 est spécifiquement destinée au tatouage de séquences vidéo. Elle consiste à travailler dans un espace transformé par décomposition en ondelettes temporelles en utilisant un modèle perceptif. Suivant la méthode un message de tatouage est généré à l'aide de deux clés, l'une correspondant à l'information à transmettre et l'autre calculée à l'aide de la séquence vidéo originale. La deuxième clé permet de résoudre le problème connu de l'étreinte fatale, c'est à dire d'éviter qu'un pirate retatoue une séquence avec son propre message et prétende ensuite à l'antériorité de son tatouage. Ces informations sont cryptées à l'aide d'un générateur BBS. La séquence vidéo est ensuite segmentée en scènes, et chaque scène est décomposée en ondelettes temporelles pour faire apparaître dans les basses fréquences les composantes statistiques de la scène et dans les hautes fréquences les éléments dynamiques de celle-ci. Un masque perceptuel spatial est calculé pour chaque coefficient d'ondelette, puis chaque coefficient d'ondelette est décomposé par un calcul de coefficients DCT pour établir un masque fréquentiel et effectuer une mise en forme du tatouage à l'aide des masques ainsi déterminés et l'appliquer aux ondelettes temporelles. Pour détecter en réception le message de tatouage il est nécessaire de connaître la séquence originale ainsi que le message de tatouage enfoui. Ceci peut être obtenu sans qu'une information de synchronisation temporelle soit nécessaire sur la séquence récupérée. La méthode présente les avantages de présenter une bonne résistance aux modifications effectuées sur les séquences vidéo, de pouvoir prendre en compte de façon fine la visibilité par une utilisation des critères de masquage et de présenter une grande redondance dans l'écriture de l'information qui a lieu dans plusieurs bandes de fréquences. L'inconvénient de cette méthode réside cependant dans le fait qu'elle nécessite l'utilisation de la séquence originale pour la lecture du tatouage et qu'elle ne permet l'enfouissement que d'un seul bit.

Dans les méthodes de codage le tatouage est enfoui en modifiant certains éléments obtenus lors du codage d'une image comme par exemple les vecteurs de mouvement du codage selon la norme MPEG ou les "matching blocs" de la compression fractale. Ces méthodes permettent de travailler directement dans les images encodées, ce qui permet une écriture et surtout une lecture du tatouage plus rapide. Elles permettent également de mieux tenir compte des distortions introduites par le codage. Malheureusement, cette prise en compte peut devenir inefficace lors d'un réencodage avec des paramètres différents.

Une première méthode de tatouage décrite par MM T.Vynne, F.Jordan,dans un article. ayant pour titre "Embedding a Digital Signature in a Video Sequence using Motion Vectors" Preprint of Special session on copyright protection and access control for multimedia services of ICIP 96,.consiste à écrire le message de tatouage en modifiant les vecteurs de mouvement du procédé de codage MPEG. Le processus de codage commence par effectuer un choix d'un ensemble de blocs dans l'image pour enfouir l'information de tatouage et par un calcul pour chacun des blocs du vecteur de mouvement optimal par rapport à l'image précédente. L'écriture du message est effectuée par modification du bit de poids faible des composantes du vecteur mouvement. La visibilité du tatouage peut être diminuée en s'assurant que les variances des blocs obtenues à l'aide du vecteur de mouvement original et du vecteur de mouvement modifié sont proches. L'avantage de cette méthode est qu'elle permet un tatouage directement dans le flux de transmission MPEG. Par contre la méthode est sensible aux estimateurs de mouvement utilisés et au réencodage.

Une deuxième méthode de codage des auteurs Joan Puate, F.Jordan, décrite dans article ayant pour titre : "Using Fractal compression Scheme to Embed a Digital Signature into an Image", proc.SPIE Video Techniques and Software for Full-service Networks, Oct. 96, consiste à écrire le tatouage en modifiant les paramètres utilisés dans le codage fractal. La robustesse de la méthode dépend de la taille des blocs de partition de l'image utilisés pour réaliser le codage. Plus la taille des blocs est importante plus la méthode est robuste mais aussi moins la qualité de l'image obtenue est bonne. D'autre part, le temps de calcul est important.

Le but de l'invention est de pallier les inconvénients précités.

A cet effet l'invention a pour objet un procédé de tatouage d'images pour le traitement et la transmission d'images fixes ou vidéo du type consistant à enfouir dans les images avant leur transmission, un message par modification des données caractéristiques des images caractérisé en ce qu'il consiste à effectuer un co-tatouage par enfouissement périodique d'une matrice binaire P dans l'image pour déterminer à la réception les coordonnées de l'origine de l'image initiale et permettre le calage des images reçues relativement à cette origine afin de rendre possible la lecture du message enfoui.

Le procédé selon l'invention a pour avantage, qu'il permet d'effectuer un tatouage à la fois robuste, fiable, et de faible complexité.

L'invisibilité du tatouage est totale, et ceci même sur des équipements de visualisation professionnels et de très haute qualité.

A la différence des procédés de l'art antérieur précités, le tatouage peut être relu sans avoir besoin de l'image originale non tatouée ce qui permet d'appliquer le procédé au contrôle automatique de diffusion.

Le marquage résiste bien aux compressions MPEG et JPEG.

Le procédé de co-tatouage mis en oeuvre offre également une résistance aux découpes de l'image ce qui est important compte tenu des systèmes de codage et de transmission vidéo actuels. La faible complexité de cet algorithme en lecture constitue un avantage certain par rapport aux méthodes de synchronisation par recherche exhaustive comme l'algorithme spatial de l'EPFL par exemple.

Enfin il permet également de s'assurer de la fiabilité du message relu en donnant une information sur la qualité de ce message. Le taux d'erreur sur le message final, ainsi que le temps de latence de décision peuvent être paramétrés pour s'adapter aux contraintes de chaque application.

D'autres caractéristiques et avantages de l'invention apparaîtront à l'aide de la description qui suit faite en regard des dessins annexés qui représentent :

La figure 1 les principales étapes du traitement pour réaliser la transmission d'un tatouage d'image selon l'invention.
Les figures 2 et 3 une illustration de la méthode de tatouage par codage par transformée DCT mise en oeuvre selon l'invention.
La figure 4 un organigramme illustrant le processus de cartographie des coefficients DCT de tatouage sur toute l'image mis en oeuvre par l'invention.
Les figures 5 et 6 les différentes étapes du processus de tatouage selon l'invention mises sous la forme d'un organigramme.

La figure 7 l'obtention d'une matrice de co-tatouage selon l'invention.

La figure 8 un schéma illustrant le principe d'écriture d'un co-tatouage selon l'invention.

La figure 9 un schéma illustrant le Principe de lecture d'un co-tatouage selon l'invention.

La figure 10 des étapes du postraitement effectué par l'invention sous la forme d'un organigramme.

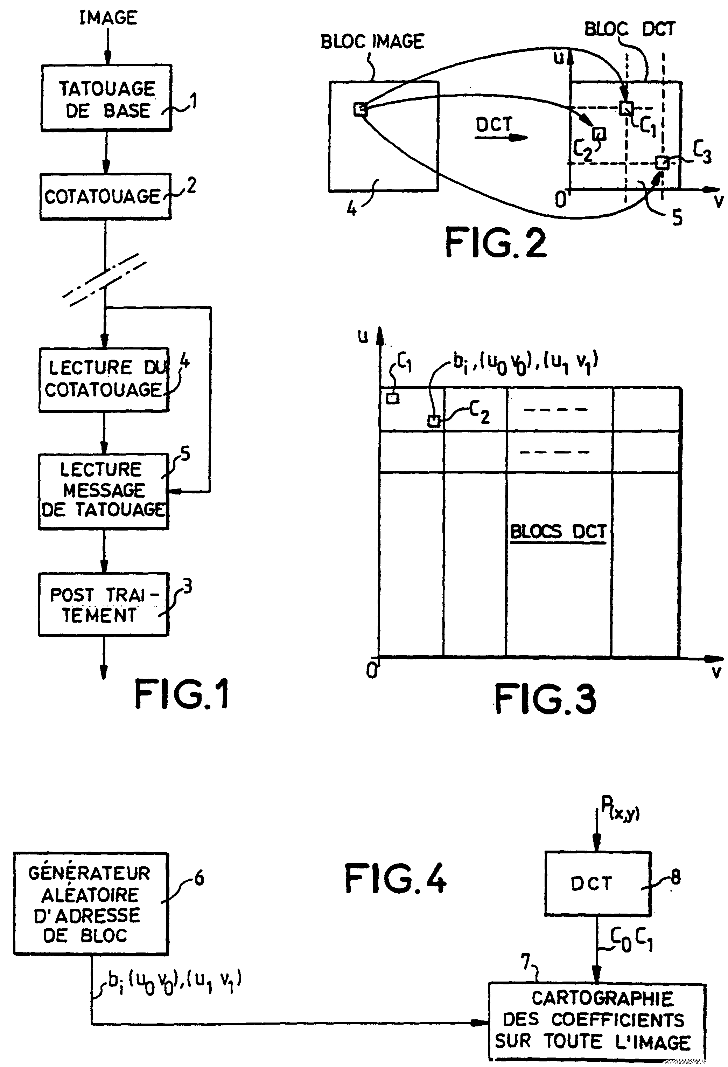

Le procédé de tatouage pour la transmission d'images selon l'invention qui est représenté à la figure 1 met en oeuvre trois algorithmes, un algorithme de tatouage de base 1 qui permet d'enfouir le message de tatouage dans l'image, un algorithme de co-tatouage 2 permettant une resynchronisation spatiale de l'image lorsque celle-ci a subi un décalage et un algorithme de postraitement 3 qui permet la fiabilisation des données issues de la lecture du tatouage de base 4 et du co-tatouage 5. Ces algorithmes sont utilisables soit pour le traitement d'images fixes, soit pour le tatouage d'images vidéo.

La fonction de l'algorithme de tatouage de base 1 est d'effectuer une modulation des coefficients DCT des blocs transformés de l'image. Avant d'effectuer cette transformation l'image est décomposée en blocs adjacents de taille NxN, puis chacun des blocs est transformé en un bloc de NxN coefficients F(u,v) obtenus par la relation connue :

$$F(u,v)=4/N^2.c(u).c(v).\sum_{x=0}^{N-1}\sum_{y=0}^{N-1}f(x,y).\frac{\cos(2x+1).u.pi}{2N}.\frac{\cos(2y+1).v.pi}{2N}$$

$$(1)$$

avec

u=0 à N -1

v=0 à N -1

$c(i)=\frac{1}{2}\sqrt{2}$   pour i=0

$c(i)=1$     pour i=1 à N-1

Comme le montre l'exemple de la figure 2 chaque bloc 4 de l'image de NxN pixels donne naissance à un bloc 5 de NxN coefficients DCT.Dans un bloc de l'image, chaque pixel est référencé par ses coordonnées (x,y) par rapport à l'origine du bloc. De même, chaque coefficient du bloc DCT est référencé par ses coordonnées (u,v) par rapport à l'origine du bloc. L'enfouissement d'un message de tatouage est réalisé en modifiant de la façon représentée aux figures 2 et 3 certains coefficients. composant les blocs DCT. Le choix des blocs et de leurs coefficients est réalisé de façon aléatoire de la façon représentée à la figure 4 au moyen d'un générateur d'adresse de bloc 6 qui détermine les coefficients à modifier dans chacun des blocs. Chaque bit $b_i$ du message à enfouir est associé à un bloc de l'image. Ce bit est enfoui par modification de deux coefficients DCT $c_0$ et $c_1$ de ce bloc.

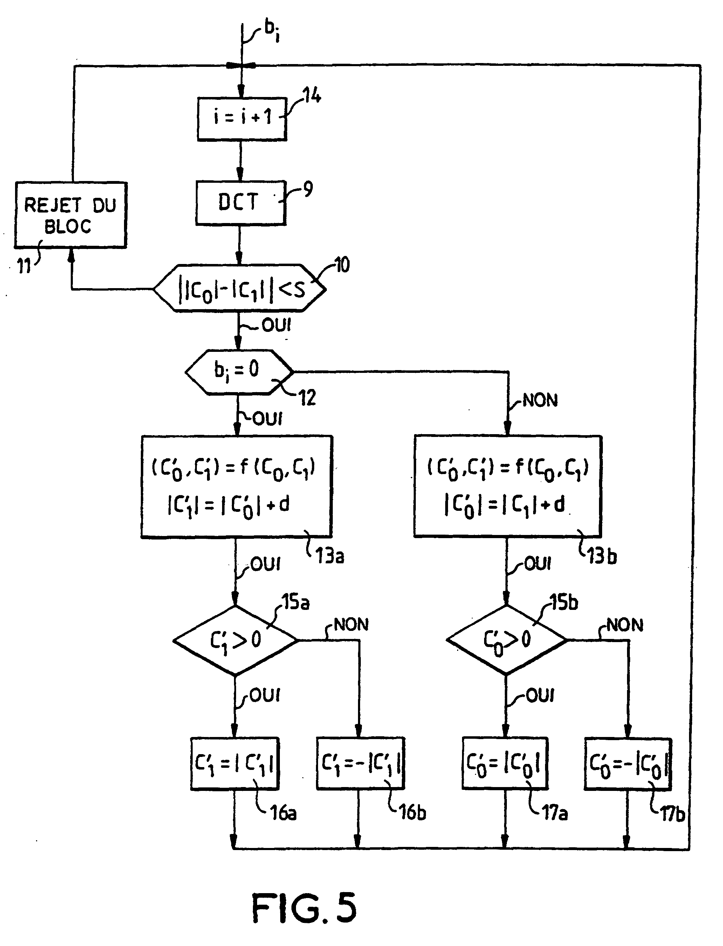

Le choix de ces coefficients dépend de la clé ; ils sont en général choisis dans les fréquences basses de l'image c'est à dire celles qui se trouvent être situées dans le coin inférieur gauche des blocs de coefficients DCT. Pour des raisons de sécurité seulement deux valeurs de coefficient $c_0$ et $c_1$ sont sélectionnées comme le montre la figure 3 par un tirage aléatoire. Cette sélection est effectuée de la façon représentée à la figure 4 à partir d'un générateur aléatoire d'adresses de bloc 6 qui sélectionne pour chaque bit $b_i$ deux adresses de coefficient $(U_0 V_0)$ et $(u_1 v_1)$. Une cartographie des couples $c_0$ et $c_1$ de coefficients DCT sélectionnés est mémorisée dans un espace mémoire 7. Le tatouage proprement dit est ensuite réalisé en modifiant les valeurs des coefficients $c_0$ et $c_1$ suivant le procédé décrit par les étapes de traitement 9 à 19 représentées sur l'organigramme de la figure 5. Suivant ce procédé les valeurs absolues des coefficients DCT de chaque couple de coefficients $c_0, c_1$ calculés à l'étape 9 sont comparées à l'étape 10 à une valeur de seuil déterminée S. Si le résultat de la comparaison effectuée à l'étape 10 n'est pas inférieur au seuil S le bloc de coefficient est rejeté à l'étape 11 et le procédé passe à l'étape 14 à l'analyse du couple de coefficients du bloc suivant. Par contre si à l'étape 10 le résultat de la comparaison est inférieur au seuil S la phase d'enfouissement du bit $b_i$ s'exécute par modification de la valeur des couples des coefficients DCT sélectionnés. Cette modification est réalisée par l'exécution des étapes 12 à $17_b$ en tranformant de façon biunivoque par une fonction f chaque couple de coefficients $(c_0, c_1)$ en un nouveau couple $(c'_0, c'_1)$ tel que la fonction f respecte la relation $|c'_1| - |c'_0| \geq d$. Si à l'étape 12 la valeur du bit $b_i$ à enfouir est 0 alors la valeur absolue du coefficient $c_1$ prend à l'étape $13_a$ la valeur absolue $|c'_1|$ obtenue en ajoutant une valeur d'accroissement déterminée d à la valeur absolue du coefficient $c'_0$.Dans le cas contraire si à l'étape 12 la valeur du bit $b_i$ à inscrire est 1 c'est la valeur de l'autre coefficient $c_0$ qui est modifiée à l'étape $13_b$ en prenant pour valeur absolue $|c'_0|$ celle obtenue en ajoutant à la valeur absolue du coefficient $c'_1$ la valeur d'accroissement d. Des tests sont exécutés aux étapes $15_a$ et $15_b$ pour déterminer les signes des coefficients $c'_0$ et $c'_1$. Si le résultat d'un test $15_a, 15_b$, est positif le signe donné au coefficient $c'_0$ respectivement $c'_1$ est positif, par contre le signe devient négatif dans le cas contraire comme cela est figuré aux étapes $16_a$, $16_b$ et $17_a$, $17_b$.

Pour palier au fait que certains bits $b_i$ peuvent être inutilisables du fait qu'ils conduisent à des valeurs de coefficients $c_0$, $c_1$ pour lesquels le test de l'étape 10 est positif, la répétition de l'algorithme est réalisée sur tous les blocs de l'image ce qui conduit par exemple, pour un standard d'image de télévision comportant 576 lignes et 720 colonnes par trame à utiliser un mot de message permettant de tatouer 6480 blocs.

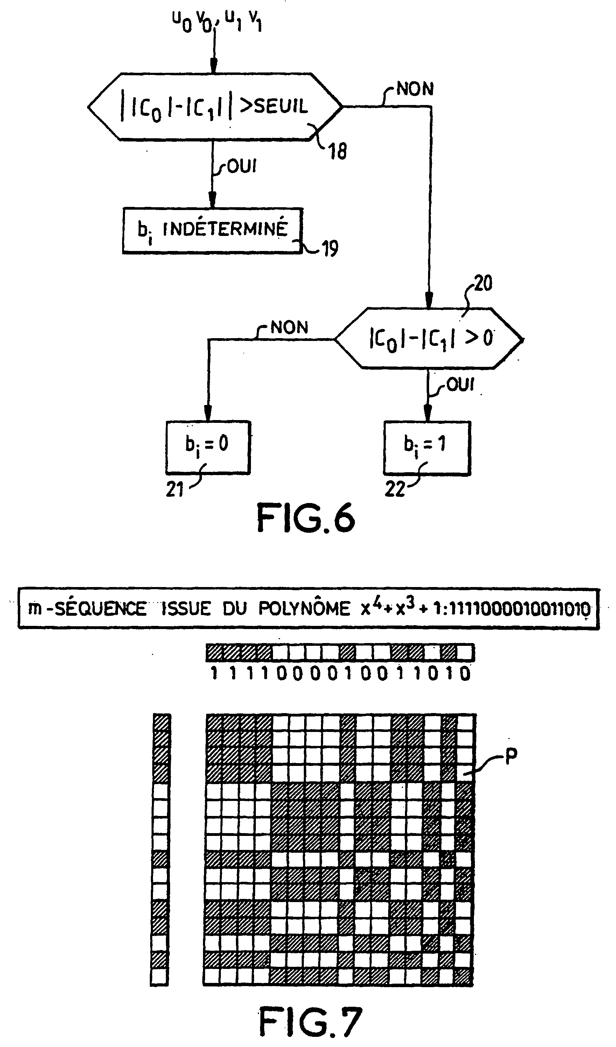

En réception la lecture du message de tatouage qui est effectuée à l'étape 5 de l'organigramme de la figure 1 a lieu de la façon représentée aux étapes 18 à 22 de l'organigramme de la figure 6 par décodage des couples de coefficients $c_0$, $c_1$ correspondant à chacun des bits bi du message de tatouage. A l'étape 18 la valeur absolue de la différence des valeurs absolues des couples de coefficients $c_0$, $c_1$ est comparée à la valeur du seuil S qui a été utilisée à l'émission lors de l'enfouissement du bit $b_i$. Si le résultat de la comparaison est positif la valeur du bit $b_i$ correspondant est considérée indéterminée à l'étape 19 et le procédé passe au décodage du couple de coefficients $c_0$ $c_1$ du bloc de coefficients correspondant au bit enfoui $b_{i+1}$ suivant. Par contre si à l'étape 18 le résultat du test est négatif, la valeur du bit $b_i$ peut être déterminée et le procédé passe à l'exécution de l'étape 20 qui consiste à comparer à la valeur zéro la différence des valeurs absolues des coefficients $c_0$, $c_1$ pour déterminer à l'étape 21 que la valeur du bit $b_i$ est "nulle" si le résultat de la comparaison de l'étape 20 est positif, ou déterminer à l'étape 22 que la valeur bit $b_i$ vaut "un" si le résultat de la comparaison de l'étape 20 est négatif.

Le procédé de co-tatouage figuré à l'étape 2 de l'organigramme de la figure 1 permet de retrouver, par l'exécution de l'étape 4, les coordonnées de l'origine de l'image initiale lorsqu'elle est reçue par un récepteur et lorsque celle ci a été découpée ou déplacée en translation, en vue de la synchronisation pour la lecture d'un autre tatouage par exemple.

Pour retrouver dans ce cas les coordonnées d'origine de l'image une première solution peut consister à utiliser l'algorithme connu du "Patchwork" de MM William Bender, Daniel Gruhl, et Norishige Morimoto déjà cité. Il suffit dans ce cas d'essayer toutes les translations possibles, de calculer la somme S des différences de luminance des couples de points de l'image en ne gardant comme coordonnées d'origine que celles pour lesquelles la somme S est maximale. Mais ce processus de lecture est compliqué et prend du temps.

La méthode de co-tatouage selon l'invention permet de simplifier notablement ce processus en remédiant efficacement au problème rencontré dans la transmission des images fixes ou animées qui peuvent subir un décalage en résultat des traitements introduits par les codeurs MPEG, JPEG ou les matériels d'enregistrement par exemple. Sans repère d'origine, la lecture d'un tatouage porteur d'un message est en effet difficile voir impossible.

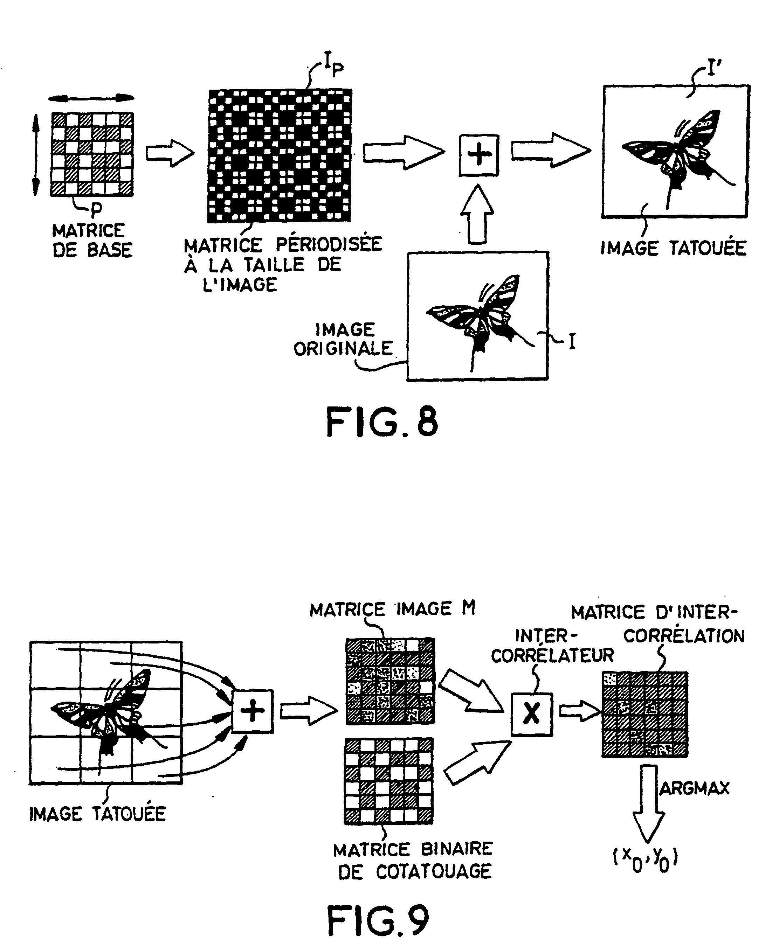

Selon l'invention le procédé de co-tatouage utilise une matrice pseudo-aléatoire binaire P de taille mxm dans l'image, de moyenne nulle et dont la fonction d'autocorrélation est la plus faible possible hors de l'origine. Comme le montre la figure 7 cette matrice est obtenue par mise en symétrie d'une m-séquence de bits. Dans l'exemple le polynôme générateur a pour équation $x^4 + x^3 + 1$ mais d'autres formes de polynômes primitifs peuvent également être utilisées. La matrice P est utilisée pour fabriquer une image $I_p$ de la taille de l'image à tatouer I par une répétition périodique de celle-ci de la façon représentée sur la figure 8. Les valeurs de luminance I(i,j) des pixels de coordonnées (i,j) dans l'image I sont modifiées en appliquant à celle-ci une amplitude de marquage d en plus ou en moins en fonction de l'état binaire "+1" ou "-1" des pixels correspondants de l'image binaire $I_p$ suivant les relations :

$$I'(i,j) = I(i,j) + d \qquad \text{si } I_p(i,j) = 1 \qquad\qquad (2)$$

$$I'(i,j) = I(i,j) - d \qquad \text{si } I_p(i,j) = -1 \qquad\qquad (3)$$

Dans les relations (2) et (3) l'amplitude de marquage peut être rendue dépendante de l'image afin de diminuer la visibilité du marquage.

En réception la lecture de l'image tatouée a lieu de la façon représentée à la figure 9 en fabriquant à partir de l'image tatouée I' reçue une matrice image M de taille mxm suivant la relation :

$$M(i,j) = \sum_{k=0}^{k=p} \sum_{l=0}^{l=q} I'(km+i, lm+j) \quad (4)$$

avec $p < \dfrac{N-i}{m}$ et $q < \dfrac{N-j}{m}$

ce qui correspond à sommer les blocs de taille NxN de l'image.

Un calcul d'intercorrélation entre la matrice M et la matrice binaire d'origine P est ensuite effectué sur tous les décalages possibles de la matrice M. Ce calcul est effectué suivant la relation :

$$S(x,y) = \sum_{i=0}^{i} \sum_{j=0}^{j} M(i,j) P((i+x) \bmod m, (j+y) \bmod m) \quad (5)$$

avec i<m et j<m

en résultat de calcul les coordonnées xo et yo de l'origine retenues sont celles pour lesquelles le nombre S(xo, yo) est maximum.

L'algorithme de co-tatouage permet de retrouver les coordonnées de l'origine modulo le nombre m. Naturellement lorsque m=N la taille de l'image originale on se retrouve dans les conditions de l'algorithme du "patchwork" de l'art antérieur.

L'exécution de l'étape 3 de post-traitement de l'organigramme de la figure 1 a pour but d'examiner la fiabilité des données issues du tatouage de base notamment dans les applications de contrôle automatique lorsque les conditions de transmission sont mauvaises, dans le cas par exemple de transmissions MPEG à très bas débit. L'algorithme utilisé utilise la redondance introduite lors de l'écriture du tatouage et à l'aide de critères statistiques donne une estimation de la qualité et de la fiabilité du message relu. Cette redondance prend la forme d'une redondance infra-image ou d'une redondance temporelle. La redondance Infra-image peut être exploitée dans le cas du tatouage d'images fixes et vidéo. Elle est due à l'utilisation de codes correcteurs d'erreurs ou de répétitions lors de l'écriture du message. La redondance temporelle est obtenue en répétant le même message sur chaque image vidéo, elle permet d'estimer la qualité du message relu en donnant à priori une idée de la distribution des bits du message relu. En supposant par exemple qu'un seul bit est enfoui en étant répété 10 fois dans l'image, dans ce cas, le message relu s'il est sans erreur, est de la forme : 1111111111 ou 0000000000. Si après transmission le message lu est de la forme 0001000000 cela veut dire qu'il y a eu au moins une erreur et on peut alors supposer avec une confiance suffisamment grande que le bit 0 a été émis. Si par contre le message relu est de la forme 0111010011 alors on peut décider que le bit 1 a été émis du fait que 6 bits sont dans l'état 1 et 4 bits sont dans l'état 0. Cependant comme dans ce dernier cas la confiance en ce résultat apparaît plus faible et il est plus judicieux de ne pas décider.

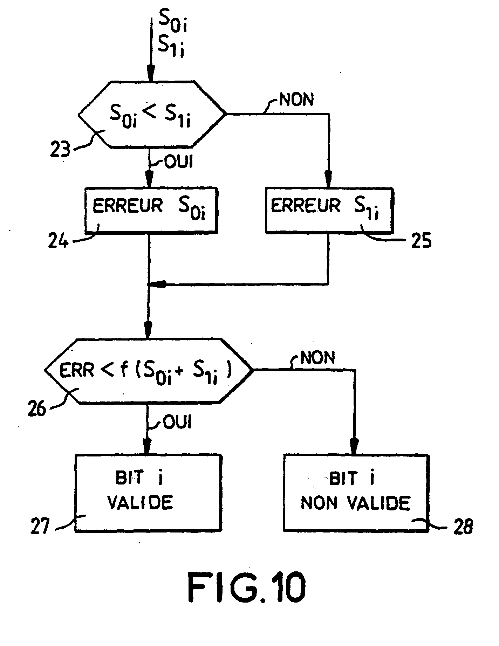

Une mise en oeuvre de cet algorithme est illustrée sur l'organigramme de la figure 10. Dans cet organigramme $S_{0i}$ désigne le nombre de fois où un bit $b_i$ de rang i du message a été lu à la valeur 0 et $S_{1i}$ désigne le nombre de fois ou ce même bit a été lu avec la valeur 1. A l'étape 23 un premier test est effectué pour comparer les nombres $S_{0i}$ et $S_{1i}$. Si le nombre $S_{0i}$ est inférieur au nombre $S_{1i}$ alors il est décidé à l'étape 24 qu'il y a eu $S_{0i}$ erreurs de transmission et que le bit émis avait probablement la valeur 1, par contre si dans le cas contraire le nombre $S_{0i}$ est supérieur au nombre $S_{1i}$ il est décidé à l'étape 25 qu'il y a eu $S_{1i}$ erreurs de transmission et que le bit $b_i$ émis avait probablement la valeur 0. Le degré de confiance à apporter à ces résultats est ensuite déterminé à l'étape 27 suivante par un test binomial de ceux ci modélisé par la loi binomiale de probabilité de Bernouilli. Si la qualité du test apparaît suffisante le bit $b_i$ est validé à l'étape 27 dans le cas contraire il est à l'étape 28 invalidé. A l'issue des étapes 27 et 28 le système passe au test du bit $b_{i+1}$ suivant du message reçu.

## Revendications

1. Procédé de tatouage d'images pour le traitement et la transmission d'images fixes ou vidéo du type consistant à enfouir (1) dans les images avant leur transmission, un message par modification des données caractéristiques des images **caractérisé en ce qu'**il consiste à effectuer un co-tatouage (2) par enfouissement périodique d'une matrice binaire P dans l'image pour déterminer à la réception les coordonnées de l'origine de l'image initiale et permettre le calage des images reçues relativement à cette origine afin de rendre possible la lecture du message enfoui.

2. Procédé selon la revendication 1 **caractérisé en ce que** la matrice binaire de co-tatouage est une matrice pseudo-aléatoire P de taille mxm obtenue par symétrie d'une m-séquence binaire.

3. Procédé selon l'une quelconque des revendications 1 et 2 **caractérisé en ce qu'**il consiste à fabriquer une image $I_p$ de la taille de l'image tatouée par une répétition périodique de la matrice pseudo-aléatoire P, et à modifier les valeurs de luminance I(i,j) de pixels de coordonnées (i,j) de l'image homologues à ceux de l'image obtenue par répétition périodique de la matrice de co-tatouage par une amplitude de marquage dépendant pour chaque pixel de la valeur du pixel homologue dans l'image obtenue par répétition périodique de la matrice de tatouage.

4.  Procédé selon la revendication 2 **caractérisé en ce qu'**il consiste pour déterminer en réception les coordonnées de l'origine de l'image initiale, à découper l'image reçue en blocs, à sommer les blocs pour former une matrice M de taille mxm, à intercorréler la matrice M avec la matrice binaire de co-tatouage P par décalages successifs de la matrice M relativement à la matrice P, et à prendre pour coordonnées de l'origine les coordonnées pour lesquelles le produit d'intercorrélation est maximum.

5.  Procédé selon l'une quelconque des revendications 1 à 4 **caractérisé en ce qu'**il consiste pour effectuer un tatouage (1) sur des images vidéo, à transformer l'image en blocs de coefficients DCT, à enfouir un message dans l'image en modulant les coefficients DCT (9,..22) pour effectuer un marquage adaptatif afin d'obtenir une invisibilité du message enfoui lors de la restitution de l'image, et à rendre robuste le message aux dégradations par l'utilisation d'une redondance.

6.  Procédé selon la revendication 5 **caractérisé en ce qu'**il consiste à associer à chaque bit $b_i$ du message à enfouir deux coefficients d'un bloc de coefficients DCT et à modifier (10,...17) les valeurs des deux coefficients sélectionnés en fonction de la valeur binaire du bit du message à enfouir.

7.  Procédé selon la revendication 6 **caractérisé en ce qu'**il consiste pour effectuer le tatouage à comparer (10) la différence des valeurs absolues des couples de coefficients choisis dans chaque bloc à une valeur de seuil déterminée S pour modifier (13,...17) la valeur absolue d'un de ceux-ci en fonction de l'état binaire du bit du message à enfouir lorsque le résultat de la comparaison est inférieure à la valeur de seuil déterminée S.

8.  Procédé selon l'une quelconque des revendications 5 à 7 **caractérisé en ce qu'**il consiste pour lire le tatouage d'une image vidéo à décoder les couples des coefficients DCT correspondant aux bits du message enfoui en comparant (18) la valeur absolue de la différence des valeurs absolues des couples de coefficients à la valeur de seuil S déterminée, à comparer (20) à la valeur zéro la différence des valeurs absolues des couples de coefficients pour déterminer l'état binaire des bits enfouis correspondants lorsque le résultat de la comparaison est inférieur à la valeur du seuil S ou à déclarer (19) l'état binaire des bits enfouis comme étant indéterminée si le résultat de la comparaison est supérieur à la valeur du seuil S.

9.  Procédé selon l'une quelconque des revendications 1 à 8 **caractérisé en ce qu'**il consiste à effectuer un tatouage sur tous les points de l'image.

10. Procédé selon l'une quelconque des revendications 1 à 9 **caractérisé en ce qu'**il consiste à effectuer un post-traitement (3; 23,...,28) sur les images reçues pour estimer la qualité et la fiabilité du message enfoui en utilisant la redondance du message enfoui.

11. Procédé selon la revendication 10 **caractérisé en ce qu'**il consiste à répéter le message de tatouage sur chaque image vidéo durant un nombre déterminé de fois en comparant (2,3) pour chaque bit du message de tatouage le nombre de fois où il est reçu selon un premier état et le nombre de fois où il est reçu selon un deuxième état, et à comparer (26) les valeurs totalisées ainsi obtenues à une valeur de seuil déterminée par la loi de probabilité binomiale de Bemouilli.

**Patentansprüche**

1.  Verfahren zum verdeckten Kennzeichnen von Bildern für die Verarbeitung und die Übertragung von Stand- oder Videobildern des Typs, der darin besteht, in die Bilder vor ihrer Übertragung durch Modifikation der charakteristischen Daten der Bilder eine.Nachricht einzubetten, **dadurch gekennzeichnet, daß** es darin besteht, durch periodische Einbettung einer binären Matrix P in das Bild eine begleitende verdeckte Kennzeichnung (2) vorzunehmen, um beim Empfang die Koordinaten des Ursprungs des Ausgangsbildes zu bestimmen und die Justierung der empfangenen Bilder in bezug auf diesen Ursprung zu ermöglichen, um das Lesen der eingebetteten Nachricht zu ermöglichen.

2.  Verfahren nach Anspruch 1, **dadurch gekennzeichnet, daß** die binäre Matrix für die begleitende verdeckte Kennzeichnung eine Pseudozufallsmatrix P mit Größe m × m ist, die durch Symmetrie aus einer binären m-Sequenz erhalten wird.

3.  Verfahren nach einem der Ansprüche 1 und 2, **dadurch gekennzeichnet, daß** es darin besteht, ein Bild $I_p$ mit der

Größe des verdeckt **gekennzeichneten** Bildes durch periodische Wiederholung der Pseudozufallsmatrix P herzustellen und die Luminanzwerte I(i,j) von Bildelementen mit Bildkoordinaten (i,j), die zu jenen des durch periodische Wiederholung der Matrix für die begleitende verdeckte Kennzeichnung erhaltenen Bildes homolog sind, durch eine Markierungsamplitude, die für jedes Bildelement vom Wert des homologen Bildelements in dem durch periodische Wiederholung der Matrix für die verdeckte Kennzeichnung erhaltenen Bild abhängt, zu modifizieren.

4. Verfahren nach Anspruch 2, **dadurch gekennzeichnet, daß** es darin besteht, beim Empfang die Koordinaten des Ursprungs des Ausgangsbildes zu bestimmen, das empfangene Bild in Blöcke zu zerlegen, die Blöcke zu summieren, um eine Matrix M mit Größe m × m zu bilden, eine Korrelation zwischen der Matrix M und der binären Matrix P für die begleitende verdeckte Kennzeichnung durch sukzessive Verschiebungen der Matrix M in bezug auf die Matrix P herzustellen und als Koordinaten des Ursprungs diejenigen Koordinaten zu verwenden, für die das Korrelationsprodukt maximal ist.

5. Verfahren nach einem der Ansprüche 1 bis 4, **dadurch gekennzeichnet, daß** es darin besteht, für eine verdeckte Kennzeichnung (1) eine Transformation des Bildes in Blöcke aus DCT-Koeffizienten vorzunehmen, in das Bild eine Nachricht einzubetten, indem die DCT-Koeffizienten (9, ... 22) moduliert werden, um eine adaptive Markierung vorzunehmen, um eine Unerkennbarkeit der eingebetteten Nachricht bei der Wiederherstellung des Bildes zu erzielen, und die Nachricht gegenüber Verschlechterungen durch Verwendung einer Redundanz robust zu machen.

6. Verfahren nach Anspruch 5, **dadurch gekennzeichnet, daß** es darin besteht, jedem Bit $b_i$ der einzubettenden Nachricht zwei Koeffizienten eines Blocks aus DCT-Koeffizienten zuzuordnen und die Werte der beiden ausgewählten Koeffizienten in Abhängigkeit vom binären Wert des Bits der einzubettenden Nachricht zu modifizieren (10, ..., 17).

7. Verfahren nach Anspruch 6, **dadurch gekennzeichnet, daß** es darin besteht, für die Ausführung der verdeckten Kennzeichnung die Differenz der Absolutwerte der gewählten Paare von Koeffizienten in jedem Block mit einem bestimmten Schwellenwert S zu vergleichen (10), um den Absolutwert eines von beiden in Abhängigkeit vom binären Zustand des Bits der einzubettenden Nachricht zu modifizieren (13, ..., 17), wenn das Ergebnis des Vergleichs kleiner als der bestimmte Schwellenwert S ist.

8. Verfahren nach einem der Ansprüche 5 bis 7, **dadurch gekennzeichnet, daß** es darin besteht, zum Lesen der verdeckten Kennzeichnung eines Videobildes die Paare von DCT-Koeffizienten, die den Bits der eingebetteten Nachricht entsprechen, zu decodieren, indem der Absolutwert der Differenz der Absolutwerte der Koeffizientenpaare mit dem bestimmten Schwellenwert S verglichen wird, die Differenz der Absolutwerte der Paare von Koeffizienten mit dem Wert null zu vergleichen (20), um den binären Zustand der entsprechenden eingebetteten Bits zu bestimmen, wenn das Ergebnis des Vergleichs kleiner als der Schwellenwert S ist, oder den binären Zustand der eingebetteten Bits als unbestimmt zu erklären (19), wenn das Ergebnis des Vergleichs größer als der Schwellenwert S ist.

9. Verfahren nach einem der Ansprüche 1 bis 8, **dadurch gekennzeichnet, daß** es darin besteht, eine verdeckte Kennzeichnung an allen Punkten des Bildes vorzunehmen.

10. Verfahren nach einem der Ansprüche 1 bis 9, **dadurch gekennzeichnet, daß** es darin besteht, an den empfangenen Bildern eine Nachverarbeitung (3; 23, ..., 28) vorzunehmen, um die Qualität und die Zuverlässigkeit der eingebetteten Nachricht zu schätzen, indem die Redundanz der eingebetteten Nachricht ausgenutzt wird.

11. Verfahren nach Anspruch 10, **dadurch gekennzeichnet, daß** es darin besteht, die verdeckte Kennzeichnungsnachricht in jedem Videobild in einer bestimmten Anzahl zu wiederholen, indem (2, 3) für jedes Bit der verdeckten Kennzeichnungsnachricht die Anzahl, in der es in einem ersten Zustand empfangen wird, mit der Anzahl verglichen wird, in der es in einem zweiten Zustand empfangen wird, und die so erhaltenen aufsummierten Werte mit einem Schwellenwert, der durch das Gesetz der binomischen Wahrscheinlichkeit von Bemouilli bestimmt ist, zu vergleichen (26).

**Claims**

1. Process for watermarking images for the processing and transmission of stationary or video images of the type consisting in embedding (1) in the images before their transmission, a message by modifying the data characteristic of the images, **characterized in that** it consists in performing a co-watermarking (2) by periodic embedding of a binary matrix P into the image so as to determine on reception the co-ordinates of the origin of the initial image and allow the adjustment of the images received relative to this origin so as to make it possible to read the embedded message.

2. Process according to Claim 1, **characterized in that** the co-watermarking binary matrix is a pseudo-random matrix P of size mxm obtained by symmetry of a binary m-sequence.

3. Process according to either of Claims 1 and 2, **characterized in that** it consists in building an image $I_p$ of the size of the watermarked image by periodic repetition of the pseudo-random matrix P, and in modifying the luminance values I(i,j) of pixels with co-ordinates (i,j) of the image which are homologous to those of the image obtained by periodic repetition of the co-watermarking matrix by a marking amplitude depending for each pixel on the value of the homologous pixel in the image obtained by periodic repetition of the watermarking matrix.

4. Process according to Claim 2, **characterized in that**, to determine at reception the co-ordinates of the origin of the initial image, it consists in chopping the image received into blocks, in summing the blocks to form a matrix M of size mxm, in cross-correlating the matrix M with the co-watermarking binary matrix P by successive shifts of the matrix M relative to the matrix P, and in taking as co-ordinates of the origin the co-ordinates for which the cross-correlation product is a maximum.

5. Process according to any one of Claims 1 to 4, **characterized in that**, to perform a watermarking (1) on video images, it consists in transforming the image into blocks of DCT coefficients, in embedding a message into the image by modulating the DCT coefficients (9,..22) so as to perform an adaptive marking in order to achieve invisibility of the embedded message upon the restoration of the image, and in rendering the message robust to degradations by the use of a redundancy.

6. Process according to Claim 5, **characterized in that** it consists in associating with each bit $b_i$ of the message to be embedded two coefficients of a block of DCT coefficients and in modifying (10,...17) the values of the two coefficients selected as a function of the binary value of the bit of the message to be embedded.

7. Process according to Claim 6, **characterized in that**, to perform the watermarking, it consists in comparing (10) the difference of the absolute values of the pairs of coefficients chosen from each block with a specified threshold value S so as to modify (13,...17) the absolute value of one of them as a function of the binary state of the bit of the message to be embedded when the result of the comparison is less than the specified threshold value S.

8. Process according to any one of Claims 5 to 7, **characterized in that**, to read the watermark of a video image, it consists in decoding the pairs of DCT coefficients corresponding to the bits of the embedded message by comparing (18) the absolute value of the difference of the absolute values of the pairs of coefficients with the specified threshold value S, in comparing (20) with the zero value the difference of the absolute values of the pairs of coefficients so as to determine the binary state of the corresponding embedded bits when the result of the comparison is less than the value of the threshold S or in declaring (19) the binary state of the embedded bits as being undetermined if the result of the comparison is greater than the value of the threshold S.

9. Process according to any one of Claims 1 to 8, **characterized in that** it consists in performing a watermarking on all the points of the image.

10. Process according to any one of Claims 1 to 9, **characterized in that** it consists in performing a postprocessing (3; 23,...,28) on the images received so as to estimate the quality and the reliability of the embedded message by using the redundancy of the embedded message.

11. Process according to Claim 10, **characterized in that** it consists in repeating the watermarking message on each video image during a specified number of times by comparing (2, 3) for each bit of the watermarking message the number of times it is received according to a first state and the number of times it is received according to a second state, and in comparing (26) the totalized values thus obtained with a specified threshold value determined by the Bernouilli binomial probability law.

IMAGE

TATOUAGE DE BASE — 1

COTATOUAGE — 2

LECTURE DU COTATOUAGE — 4

LECTURE MESSAGE DE TATOUAGE — 5

POST TRAITEMENT — 3

**FIG.1**

BLOC IMAGE

BLOC DCT

DCT

$C_1$

$C_2$

$C_3$

4

5

**FIG.2**

$u$

$C_1$

$b_i, (u_0 v_0), (u_1 v_1)$

$C_2$

BLOCS DCT

0

$v$

**FIG.3**

**FIG.4**

GÉNÉRATEUR ALÉATOIRE D'ADRESSE DE BLOC — 6

$b_i (u_0 v_0), (u_1 v_1)$

$P_{(x,y)}$

DCT — 8

$C_0 C_1$

7

CARTOGRAPHIE DES COEFFICIENTS SUR TOUTE L'IMAGE

$$b_i$$

$$i = i + 1 \quad 14$$

$$\text{DCT} \quad 9$$

REJET DU BLOC

11

$$\big| |C_0| - |C_1| \big| < S \quad 10$$

OUI

$$b_i = 0 \quad 12$$

OUI

NON

$$(C'_0, C'_1) = f(C_0, C_1)$$
$$|C'_1| = |C'_0| + d$$

13a

$$(C'_0, C'_1) = f(C_0, C_1)$$
$$|C'_0| = |C_1| + d$$

13b

OUI

OUI

$$C'_1 > 0 \quad 15a$$

NON

$$C'_0 > 0 \quad 15b$$

NON

OUI

OUI

$$C'_1 = |C'_1| \quad 16a$$

$$C'_1 = -|C'_1| \quad 16b$$

$$C'_0 = |C'_0| \quad 17a$$

$$C'_0 = -|C'_0| \quad 17b$$

# FIG. 5

FIG.6

m-SÉQUENCE ISSUE DU POLYNÔME $x^4 + x^3 + 1$ : 1111000010011010

1 1 1 1 0 0 0 0 1 0 0 1 1 0 1 0

FIG.7

**FIG. 8**

**FIG.9**

$S_{0i}$
$S_{1i}$

23 — $S_{0i} < S_{1i}$ — NON

OUI

24 — ERREUR $S_{0i}$

25 — ERREUR $S_{1i}$

26 — ERR $< f(S_{0i} + S_{1i})$ — NON

OUI

27 — BIT i VALIDE

28 — BIT i NON VALIDE

## FIG.10